# EUROPEAN PATENT APPLICATION

(11) **EP 1 762 606 A1**
(43) Date of publication of application: **14.03.2007**
(21) Application number: 05108407.7
(22) Date of filing: 13.09.2005
(51) Int. Cl.: C10G 45/12, C10G 45/08, C10G 65/12, B01J 29/06

(54) **A process for hydrodesulphurisation of a hydrocarbonaceous feedstock**

(71) Applicant: SHELL INTERNATIONALE RESEARCH MAATSCHAPPIJ B.V., 2596 HR Den Haag (NL)
(72) Inventor: Huve, Laurent Georges, 1031 CM Amsterdam (NL)

(57) **Abstract**

A process for hydrodesulphurisation of a hydrocarbonaceous feedstock comprising contacting the hydrocarbonaceous feedstock, in the presence of hydrogen, under hydrodesulphurisation conditions with a zeolite beta containing hydrotreating catalyst, the zeolite beta containing hydrotreating catalyst comprising at least one hydrogenating component supported on a catalyst carrier comprising 0.5 to 8.0 wt% of zeolite beta and an amorphous porous matrix material, which carrier is essentially free of other zeolitic material, to obtain a hydrodesulphurised effluent.

## Description

### Field of the invention

The present invention provides a process for hydrodesulphurisation of a hydrocarbonaceous feedstock.

### Background of the invention

It is commonly known that zeolite beta can be used in catalysts for hydrocracking and/or hydrodewaxing of hydrocarbon feedstocks. Usually, such hydrocracking and/or hydrodewaxing processes comprise a preliminary hydrotreating step using a conventional amorphous hydrotreating catalyst for removing sulphur and nitrogen. Hydrocracking and hydrodewaxing processes using zeolite beta are for example disclosed in EP 94827 A1, EP 214 717 A1, and US 4,419,220.

In EP 94 827 A1, a process for simultaneously hydrocracking and hydrodewaxing a heavy hydrocarbon oil is disclosed, wherein the oil is contacted in the presence of hydrogen with a catalyst comprising zeolite beta and a hydrogenation component under process conditions which are appropriate for hydrocracking. The catalyst may comprise a non-zeolitic porous refractory oxide matrix material, for example alumina. It is mentioned that the relative proportions of zeolite component may vary with the zeolite content ranging from 10 to 99. A catalyst with an equal amount of zeolite beta and alumina and a catalyst without non-zeolitic refractory oxide matrix material are exemplified. It is mentioned that a preliminary hydrotreating step to remove nitrogen and sulphur and to saturate naphthenes will usually improve catalyst performance.

In EP 214 717 A1 is disclosed a hydrocracking process, wherein a hydrocarbon distillate stream is first hydrotreated by passing it over a conventional hydrotreating catalyst at a relatively low hydrogen partial pressure and the thus-obtained hydrotreated oil is then hydrocracked by passing it over a hydrocracking catalyst comprising zeolite beta and a hydrogenation component. The exemplified hydrocracking catalysts all have a catalyst carrier consisting of 50 wt% zeolite beta and 50 wt% alumina.

In US 4,419,220, a catalytic dewaxing process is disclosed wherein hydrocarbon feedstocks, in particular C₁₀+ hydrocracked feedstocks, are dewaxed by isomerising the waxy components over a zeolite beta catalyst. The catalyst preferably comprises a noble metal hydrogenation component such as platinum, palladium or another member of the platinum group, optionally in combination with non-noble metals. The zeolite beta catalyst may be composited with a porous matrix material such as alumina or silica-alumina. The exemplified catalysts all consist of platinum on zeolite beta, i.e. without a non-zeolitic matrix material. It is mentioned that a preliminary hydrotreating step to remove nitrogen and sulphur and to saturate aromatics to naphthenes without substantial boiling range conversion will improve the catalyst performance.

It is also known to use a zeolite beta catalyst for restoring the octane number of gasoline. In US 5,413,698 is disclosed a process comprising a first step hydrotreating of a sulphur-containing cracked petroleum fraction in the gasoline boiling range and a second conversion step of the hydrotreated intermediate product over a first catalyst zone and a second catalyst zone. The first catalyst zone comprises a large pore zeolite material having the topology of zeolite beta and the second catalyst zone comprises an intermediate pore size zeolite material having the topology of ZSM-5. The second conversion step serves to bring about the desired cracking conditions to restore the octane lost in the hydrotreating step. Process conditions in the second step are such that olefins are produced which restore the octane rating. Therefore, the hydrogen pressure on the second step is preferably low and the catalysts for the second step may be free of a hydrogenation component. The exemplified catalyst for the first catalytic zone of the second step is a catalyst consisting of 65 wt% H-zeolite beta and 35 wt% alumina. This catalysts thus has a high content of zeolite beta and does not contain a hydrogenation component.

In US 5,011,573 is disclosed a process for hydrodesulphurisation of a highly aromatic feedstock such as light cycle oil from a catalytic cracking process. A hydrodesulphurisation catalyst which contains zeolite beta as an acidic component is used. It is mentioned that the catalyst also contains an amorphous inorganic oxide material as binder in a typical concentration of 30 to 80 percent of the catalyst (excluding the metal hydrogenation component). In order to minimise cracking to lower boiling fractions, moderate temperature and pressure are applied, i.e. up to 750 °F (399 °C) and 1200 psig (83.7 bar absolute). In the example, the hydrodesulphurisation is carried out over a stacked bed of a conventional amorphous hydrotreating catalyst (CoMo on alumina) followed by a 50/50 mixture of the conventional amorphous hydrotreating catalyst and zeolite beta catalyst. The zeolite beta catalyst comprising NiW on 50% alumina and 50% zeolite beta.

### Summary of the invention

It has now been found that it is advantageous to use a small amount of zeolite beta in a catalyst for hydrodesulphurising a hydrocarbonaceous feedstock, in particular in a process for hydrodesulphurising a hydrocracker feedstock.

Accordingly, the invention provides a process for hydrodesulphurisation of a hydrocarbonaceous feedstock comprising contacting the hydrocarbonaceous feedstock, in the presence of hydrogen, under hydrodesulphurisation conditions with a zeolite beta containing hydrotreating catalyst, the zeolite beta containing hydrotreating catalyst comprising at least one hydrogenating component supported on a catalyst carrier comprising 0.5 to 8.0 wt% of zeolite beta and an amorphous porous matrix material, which carrier is essentially free of other zeolitic material, to obtain a hydrodesulphurised effluent.

It has surprisingly been found that the addition of a very small amount of zeolite beta to a conventional hydrodesulphurisation catalyst has a significant contribution in improving the hydrodesulphurised effluent. As a result of the small amount of zeolite beta the hydrodesulphurised effluent is more suitable as hydrocracker feedstock than a hydrodesulphurised effluent obtained from treating the feedstock over the same amount of a conventional amorphous hydrodesulphurisation catalyst under the same process conditions. The conversion of linear paraffins is higher, whereas there are no negative effects on desulphurisation and denitrogenation. Moreover, there is an increase in the yield of middle distillates. As a consequence, if the hydrodesulphurised effluent is to be further treated in a hydrocracker, the hydrocracking step that follows may be carried out at lower severity.

### Detailed description of the invention

In the process according to the invention a hydrocarbonaceous feedstock is contacted, under hydrodesulphurisation conditions, with a zeolite beta containing hydrotreating catalyst comprising one or more hydrogenation components on a catalyst carrier comprising 0.5 to 8.0 wt% zeolite beta based on the weight of the carrier.

The catalyst carrier comprises zeolite beta and an amorphous porous matrix material, typically alumina or silica-alumina. The catalyst carrier is essential free of zeolitic material other than zeolite beta. Reference herein to essentially free of is to not more than amounts that are considered as contaminants, i.e. typically not more than 0.1% by weight, preferably not more than 0.01% by weight, based on the weight of the catalyst carrier.

The at least one hydrogenation component may be any hydrogenation component or combination of hydrogenation components suitable for hydrodesulphurisation. Such hydrogenation components and combinations thereof are known in the art. Preferably, the at least one hydrogenation component is a non-noble metal, more preferably a combination of a non-noble metal of Group VIII and a Group VI metal of the Periodic Table of Elements, even more preferably nickel and molybdenum, cobalt and molybdenum or nickel and tungsten. The combination of nickel and molybdenum is particularly preferred. The metal may be in its elemental, sulphided or oxidic form.

The catalyst carrier comprises 0.5 to 8.0 wt% zeolite beta, preferably 2.0 to 5.0 wt% zeolite beta. The zeolite beta preferably has a silica-to-alumina ratio of at least 100, more preferably in the range of 200 to 400. Such zeolite beta is known in the art and has been described in detail in for example EP 94 827 A1.

In a preferred embodiment of the process according to the invention, the hydrocarbonaceous feedstock is contacted with a stacked configuration of hydrotreating catalysts comprising an upstream bed of a first hydrotreating catalyst without zeolite beta and a downstream bed of a second hydrotreating catalyst with 0.5 to 8.0 wt% zeolite beta in its catalyst carrier.

The first hydrotreating catalyst is a conventional hydrotreating catalyst comprising at least one hydrogenating component on a catalyst carrier comprising an amorphous porous matrix material that is essentially free of zeolitic material. The at least one hydrogenating component may be any hydrogenation component or combination of hydrogenation components suitable for hydrodesulphurisation. Preferably, the at least one hydrogenating component of the first hydrotreating catalyst is a non-noble metal, more preferably a combination of a non-noble metal Group VIII metal and a Group VI metal, even more preferably nickel and molybdenum or cobalt and molybdenum. The metal may be in its elemental, sulphided or oxidic form.

The second catalyst is the zeolite beta containing hydrotreating catalyst as defined hereinabove.

The stacked configuration of hydrotreating catalysts may comprise more than two beds of hydrotreating catalyst with a bed of the first hydrotreating catalyst located upstream of a bed of the second hydrotreating catalyst. Preferably, the stacked configuration comprises two beds of hydrotreating catalyst, i.e. a single bed of the first catalyst located upstream of a single bed of the second catalyst. The stacked configuration may comprise two or more separate catalytic zones in series in a single or in separate vessels. Alternatively, the stacked configuration may comprise a single catalytic zone with a different catalyst beds layered upon each other.

Preferably, the volume ratio of the bed of the first hydrotreating catalyst and the bed of the second hydrotreating catalyst is in the range of from 1:4 to 4:1, more preferably of from 1:3 to 3:1.

The hydrocarbonaceous feedstock used in the process according to the invention may vary within a wide boiling range. Examples of suitable feedstocks include atmospheric gasoil, coker gasoil, vacuum gas oil, deasphalted oil, catalytically cracked cycle oil, thermally and catalytically cracked gasoil. The feedstock will typically comprise hydrocarbons having a boiling point of at least 330 °C. Preferably, the feedstock will have a final boiling point in the range of from 450 to 650 °C, preferably of from 550 to 620 °C. The feedstock may have a nitrogen content of up to 5000 ppmw and a sulphur content of up to 6% by weight. Typically nitrogen contents are in the range of from 250 to 2000 ppmw and sulphur contents are in the range of from 0.2 to 5 wt%. Vacuum gasoil or heavy vacuum gasoil are particularly preferred feedstocks.

In the process according to the invention, the feedstock is contacted with a zeolite beta containing hydrotreating catalyst in the presence of hydrogen and under typical hydrodesulphurisation conditions. It will be appreciated that the exact hydrodesulphurisation conditions such as temperature, hydrogen partial pressure, hydrogen flow rate, and liquid flow rate will inter alia depend on the composition of the feedstock and the desired characteristics of the hydrodesulphurised effluent. Typically, the hydrodesulphurisation conditions comprise a temperature in the range of from 300 to 500 °C, preferably of from 350 to 450 °C, more preferably of from 370 to 420 °C, a hydrogen partial pressure in the range of from 30 to 250 bar, preferably of from 50 to 160 bar, more preferably of from 70 to 120 bar.

A weight hourly velocity of 0.1 to 10 kg feedstock per litre catalyst per hour is conveniently used. Preferably, the weight hourly velocity is in the range of from 0.1 to 8.0 kg/l/h, more preferably in the range of from 0.2 to 5.0 kg/l/h.

The ratio of hydrogen to feedstock will generally be in the range of from 100 to 5,000 normal litres hydrogen, i.e. litres at conditions of standard temperature and pressure, per kilogram feedstock, preferably in the range of from 200 to 3,000 Nl/kg.

The hydrodesulphurisation process according to the invention is particularly suitable for hydrodesulphurisation of a hydrocracker feedstock. Therefore, the process preferably further comprises contacting at least part of the hydrodesulphurised effluent with a hydrocracking catalyst under hydrocracking conditions.

Typically, a hydrodesulphurised effluent comprising liquid hydrocarbons and gaseous components like light hydrocarbons, hydrogen, hydrogen sulphide and ammonia is obtained from contacting the feedstock with the zeolite beta containing hydrotreating catalyst. The gaseous components of the effluent may be separated from the liquid components of the effluent before contacting part of or the entire liquid effluent with the hydrocracking catalyst. Preferably, however, the entire effluent, i.e. both the liquid and gaseous components, are contacted with the hydrocracking catalyst. This may be carried out in series flow operation with the hydrodesulphurisation step and the hydrocracking step in separate reactors or in a stacked bed operation with the hydrotreating catalyst(s) stacked upon the hydrocracking catalyst.

The hydrocracking catalyst may be any hydrocracking catalyst known in the art. Such catalyst typically comprise at least one hydrogenation component on a catalyst carrier. Examples of hydrogenation components that may suitably be used include Group VI (e.g. molybdenum and tungsten) and Group VIII metals (e.g. cobalt, nickel, iridium, platinum and palladium), their oxides and sulphides. The catalyst will preferably comprise at least two hydrogenation components, more preferably a Group VI metal component in combination with a non-noble metal Group VIII component. The catalyst carrier may be any suitable oxidic carrier such as alumina, silica or silica-alumina, optionally in combination with a zeolitic component. There are many commercially available hydrocracking catalysts which can be suitably applied in the process of the present invention. Preferably, the hydrocracking catalyst is acidic, i.e. contains a silica-alumina and/or zeolitic component.

The hydrodesulphurised effluent is contacted with the hydrocracking catalyst in the presence of hydrogen under typical hydrocracking conditions. Such conditions are known in the art. Typical hydrocracking conditions comprise a temperature in the range of from 300 to 500 °C and a hydrogen partial pressure in the range of from 30 to 250 bar. Preferably, the temperature is in the range 350 to 450 °C, more preferably of from 370 to 420 °C, and the hydrogen partial pressure in the range of from 50 to 160 bar, more preferably of from 70 to 120 bar. The weight hourly velocity of the effluent contacted with the hydrocracking catalyst will generally be in the range of from 0.1 to 10 kg effluent per litre catalyst per hour. The ratio of hydrogen to effluent will typically be in the range of from 100 to 5,000 Nl/kg.

The hydrogen present may be make-up hydrogen added to the hydrocracking catalyst and/or hydrogen present in the hydrodesulphurised effluent.

Preferably, the hydrodesulphurisation step and the hydrocracking step are carried out in series flow or in a stacked bed operation at essentially the same process conditions.

The process according to the invention is particularly suitable for mild hydrocracking of a relatively heavy hydrocracker feedstock. In a particularly preferred embodiment of the process according to the invention, a hydrocarbonaceous feedstock having a final boiling point in the range of from 550 to 620 °C is first hydrodesulphurised in a stacked configuration of the first and second hydrotreating catalyst as hereinabove defined and the entire hydrodesulphurised effluent is then hydrocracked at essentially the same temperature and pressure as the hydrodesulphurisation took place, preferably at a temperature in the range of from 370 to 420 °C and a hydrogen partial pressure in the range of from 70 to 120 bar.

### Examples

### EXAMPLE 1 (not according to the invention)

### Experiment 1

A vacuum gasoil having the characteristics as shown in Table 1 was contacted with catalyst 1 at a weight-averaged bed temperature of 405 °C, a hydrogen partial pressure of 115 bar and a weight hourly velocity of 1.5 kg feedstock per litre catalyst per hour. Catalyst 1 is conventional hydrodesulphurisation catalyst comprising 4 wt% nickel and 13 wt% molybdenum on a catalyst carrier of amorphous alumina. The catalyst was pre-sulphided by contacting it with a gaseous mixture of hydrogen (95 vol%) and hydrogen sulphide (5 vol%) at elevated temperature.

### EXAMPLE 2 (according to the invention)

### Experiments 2 to 4

In experiments 2 to 4, the same feedstock as used in experiment 1 was contacted with a stacked configuration of catalyst 1 and catalyst 2 at a weight-averaged bed temperature of 385 °C, 395 °C and 405 °C, respectively, a hydrogen partial pressure of 115 bar and a weight hourly velocity of 1.5 kg feedstock per litre of total catalyst per hour.

Catalyst 2 is a zeolite beta containing catalyst comprising 4 wt% nickel and 13 wt% molybdenum on a catalyst carrier of 95 wt% amorphous alumina and 5 wt% zeolite beta. The zeolite beta has a silica-to-alumina ratio of 263. A volume of 10 cc of catalyst 1 was placed in a first reactor and a volume of 10 c of catalyst 2 in a second reactor. The two reactors were placed in series such that the whole effluent of the first reactor was contacted with catalyst 2. The catalysts were then pre-sulphided as described above in experiment 1.

In Table 2 is shown for experiments 1 and 4, the net conversion of components boiling above 370 °C, selectivity for gas and specific distillate fractions, and boiling characteristics of the effluents. For experiments 1 to 4, the pour point and the cloud point of the effluent were determined (see Table 2).

Sulphur and nitrogen analysis in the different distillate fractions showed that the hydrodenitrification and hydrodesulphurisation activities were slightly better in experiment 4 compared to comparative experiments. From Table 2 it can be seen that the process according to the invention at 405 °C (experiment 4) results in a lower gas and light product make (C₁-C₄ and C₅-150 °C) and a higher selectivity for middle distillates (150-370 °C) than the comparative process at 405 °C (experiment 1). Further, the process according to the invention results in an effluent with a lower pour point and a lower cloud point than the comparative process.

**Table 1. Characteristics of the feedstock**

| | |
|---|---|
| Sulphur (%wt) | 3.02 |
| Nitrogen (ppmw) | 990 |
| Aromatics content (%wt) | |
| mono-aromatics | 4.56 |
| di-aromatis | 3.45 |
| tri+-aromatics | 8.16 |
| Boiling characteristics | |
| 0.5 %wt recovery | 301 °C |
| 2 %wt recovery | 333 °C |
| 5 %wt recovery | 356 °C |
| 10 %wt recovery | 378 °C |
| 30 %wt recovery | 424 °C |
| 50 %wt recovery | 461 °C |
| 70 %wt recovery | 501 °C |
| 90 %wt recovery | 555 °C |
| 95 %wt recovery | 577 °C |
| 98 %wt recovery | 598 °C |
| Pour point (°C) | 42 |

**Table 2. Results of experiments 1 to 4.**

| | experiment No. | | | |
|---|---|---|---|---|
| | 1 (comp.) | 2 | 3 | 4 |
| WABT^{a} (°C) | 405 | 385 | 395 | 405 |
| net conversion of 370 °C⁺ (%wt of feed) | 28.0 | 16.5 | 22.8 | 29.6 |
| Selectivity to (%wt) | | | | |
| C₁-C₄ | 2.68 | 1.38 | 2.21 | 2.33 |
| C₅-150 °C | 9.84 | 4.56 | 6.49 | 6.70 |
| 150 °C-250 °C | 20.06 | 13.24 | 17.84 | 22.05 |
| 250 °C-370 °C | 67.43 | 80.81 | 73.47 | 68.91 |
| 150 °C-370 °C | 87.49 | 94.05 | 91.31 | 90.96 |

| Boiling characteristics | | | | |
|---|---|---|---|---|
| 0.5 %wt recovery (IBP) | 99 | 130 | 98 | 104 |
| 2 %wt recovery | 143 | 206 | 159 | 149 |
| 5 %wt recovery | 201 | 272 | 225 | 201 |
| 10 %wt recovery | 261 | 321 | 285 | 254 |
| 30 %wt recovery | 367 | 394 | 379 | 360 |
| 50 %wt recovery | 415 | 434 | 424 | 412 |
| 70 %wt recovery | 459 | 475 | 467 | 456 |
| 90 %wt recovery | 521 | 532 | 526 | 519 |
| 95 %wt recovery | 547 | 555 | 551 | 545 |
| 98 %wt recovery | 571 | 577 | 574 | 569 |
| 99.5 %wt recovery (FBP) | 599 | 600 | 598 | 595 |

| Aromatics content (%wt) | | | | |
|---|---|---|---|---|
| mono-aromatics | 6.72 | 7.42 | 6.76 | 6.43 |
| di-aromatis | 1.33 | 1.18 | 1.14 | 1.25 |
| tri+-aromatics | 1.52 | 1.49 | 1.32 | 1.27 |
| Cold flow properties | | | | |
| Cloud point (°C) | +46 | +46 | +43 | +39 |
| Pour point (°C) | +39 | +39 | +35 | +30 |

| | | | | |
|---|---|---|---|---|
| ^{a} WABT : weight-averaged bed temperature | | | | |

## Claims

1. A process for hydrodesulphurisation of a hydrocarbonaceous feedstock comprising contacting the hydrocarbonaceous feedstock, in the presence of hydrogen, under hydrodesulphurisation conditions with a zeolite beta containing hydrotreating catalyst, the zeolite beta containing hydrotreating catalyst comprising at least one hydrogenating component supported on a catalyst carrier comprising 0.5 to 8.0 wt% of zeolite beta and an amorphous porous matrix material, which carrier is essentially free of other zeolitic material, to obtain a hydrodesulphurised effluent.

2. A process according to claim 1, wherein the catalyst carrier of the zeolite beta containing hydrotreating catalyst comprises 2.0 to 5.0 wt% zeolite beta.

3. A process according to claim 1 or 2, wherein the at least one hydrogenating component of the zeolite beta containing hydrotreating catalyst is a non-noble metal hydrogenating metal or a compound thereof, preferably a combination of a non-noble metal Group VIII metal and a Group VI metal or compounds thereof, more preferably a combination of nickel and molybdenum, of cobalt and molybdenum, or of compounds thereof.

4. A process according to any one of the preceding claims, wherein the hydrocarbonaceous feedstock is contacted with a stacked configuration of hydrotreating catalysts comprising an upstream bed of a first hydrotreating catalyst and a downstream bed of a second hydrotreating catalyst, wherein the first catalyst comprises at least one hydrogenating component on a catalyst carrier comprising an amorphous porous matrix material that is essentially free of zeolitic material and the second catalyst is the zeolite beta containing catalyst.

5. A process according to claim 4, wherein the at least one hydrogenating component of the first hydrotreating catalyst is a non-noble metal hydrogenating metal or a compound thereof, preferably a combination of a non-noble metal Group VIII metal and a Group VI metal or of compounds thereof, more preferably a combination of nickel and molybdenum, of cobalt and molybdenum, or of compounds thereof.

6. A process according to claim 4 or 5, wherein the stacked configuration of hydrotreating catalysts comprises two beds of catalysts.

7. A process according to any one of claims 4 to 6, wherein the volume ratio of the bed of the first hydrotreating catalyst and the bed of the second hydrotreating catalyst is in the range of from 1:4 to 4:1, preferably of from 1:3 to 3:1.

8. A process according to any one of the preceding claims, wherein the hydrodesulphurisation conditions comprise a temperature in the range of from 350 to 450 °C, preferably of from 370 to 420 °C, and a hydrogen partial pressure in the range of from 50 to 160 bar, preferably of from 70 to 120 bar.

9. A process according to any one of the preceding claims, further comprising contacting at least part of the hydrodesulphurised effluent with a hydrocracking catalyst under hydrocracking conditions to obtain a hydrocracked effluent.

10. A process according to claim 9, wherein the entire hydrodesulphurised effluent is contacted with the hydrocracking catalyst.

11. A process according to claim 9 or 10, wherein the hydrocracking conditions comprise contacting the hydrodesulphurised effluent with the hydrocracking catalyst at a temperature in the range of from 350 to 450 °C, preferably of from 370 to 420 °C, and at a hydrogen partial pressure in the range of from 50 to 160 bar, preferably of from 70 to 120 bar.

12. A process according to any one of claims 9 to 11, in particular according to claim 10, wherein the hydrocracking conditions are essentially the same as the hydrodesulphurisation conditions.

13. A process according to any one of the preceding claims, wherein the feedstock has a final boiling point in the range of from 450 to 650 °C, preferably of from 550 to 620 °C.
